# EUROPÄISCHE PATENTSCHRIFT

(11) **EP 1 035 612 B1**
(45) Veröffentlichungstag und Bekanntmachung des Hinweises auf die Patenterteilung: **05.10.2005**
(21) Anmeldenummer: 00102355.5
(22) Anmeldetag: 04.02.2000
(51) Int. Cl.: H01M 10/40

(54) **Anwendung von Additiven in Elektrolyten für elektrochemische Zellen**
Use of additives in electrolytes for electrochemical cells
Utilisation d'additifs dans des électrolytes pour cellules électrochimiques

(30) Priorität: 12.03.1999 DE 19910968
(43) Veröffentlichungstag der Anmeldung: 13.09.2000
(73) Patentinhaber: Merck Patent GmbH, 64293 Darmstadt (DE)
(72) Erfinder: Heider, Udo, Dr., 64560 Riedstadt (DE); Schmidt, Michael, Dr., 64331 Weiterstadt (DE); Amann, Anja, 64395 Brensbach (DE); Niemann, Marlies, 64572 Büttelborn (DE); Kühner, Andreas, Dr., 64289 Darmstadt (DE)

(56) Entgegenhaltungen:
- EP-A- 0 631 340
- WO-A-98/07729
- WO-A-98/28807
- FR-A- 2 704 099
- US-A- 5 660 947
- US-A- 5 691 083
- BARTHEL J.: "a new class of electrochemically and thermally stable lithium salts for lithium battery electrolytes" J.ELECTROCHEM.SOC. , Bd. 144, Nr. 11, 1997, XP002140970
- BARTHEL J.: " NEW CLASS OF ELECTROCHEMICALLY AND THERMALLY STABLE LITHIUM SALTS OFR LITHIUM BATTERY ELECTROLYTES" JOURNAL OF THE ELECTROCHEMICAL SOCIETY, Bd. 147, Nr. 1, 1. Januar 2000 (2000-01-01), Seite 21-24 XP002140971

## Beschreibung

Die Erfindung betrifft die Anwendung von Verbindungen auf Salzbasis als Additive in Elektrolyten zur Verbesserung der Eigenschaften elektrochemischer Zellen.

Lithium-Ionen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb.

Diese Batterien bestehen aus Kathode, Anode, Separator und einem nichtwäßrigen Elektrolyt. Als Kathode werden typischerweise Li(MnMe_{z})₂O₄, Li(CoMe_{z})O₂, Li(CoNiₓMe_{z})O₂ oder andere Lithium-Interkalations und Insertions-Verbindungen verwendet. Anoden können aus Lithium-Metall, Kohlenstoffen, Graphit, graphitischen Kohlenstoffen oder andere Lithium-Interkalations und Insertions-Verbindungen oder Legierungsverbindungen bestehen. Als Elektrolyt werden Lösungen mit Lithiumsalzen wie LiPF₆, LiBF₄, LiClO₄, LiAsF₆, LiCF₃SO₃, LiN(CF₃SO₂)₂ oder LiC(CF₃SO₂)₃ und deren Mischungen in aprotischen Lösungsmitteln verwendet.

Eine Vielzahl von Additiven zur Anwendung in Lithium-Ionen-Batterien werden in der Literatur erwähnt. Beispielsweise werden in EP 0759641 und US 5776627 organische aromatische Verbindungen wie Biphenyl, substituierte Thiophene und Furane, in EP 0746050 und EP 0851524 substituierte Anisol-, Mesithylen- und Xylolderivate dem Elektrolyten zugesetzt um die Sicherheit der Batterie im Fall einer Überladung zu erhöhen. Zum gleichen Zweck werden in US 5753389 organische Carbonate als Additive verwendet. Zur Verbesserung der Zyklenstabilität werden in EP 0856901 organische Boroxine zugegeben. All diese Additive haben jedoch einige entscheidende Nachteile. Organische Substanzen, wie sie in den hier genannten Schriften verwendet werden, besitzen im allgemeinen geringe Flammpunkte und niedrige Explosionsgrenzen.

| Additiv | Explosionsgrenze [%] | Flammpunkt [°C] |
|---|---|---|
| Thiophen | 1,5-12 | -9 |
| Anisol | 0,34-6,3 | 43 |
| Mesitylen | 1-6 | 54 |
| Furan | 2,3-14,3 | -35 |

Da bei der Anwendung von elektrochemischen Zellen und insbesondere bei Auftreten von Fehlern (z.B. Kurzschluß, mechanische Beschädigung) immer eine Erwärmung auftritt, ist bei Austritt des Elektrolyten eine zusätzliche Gefahrenquelle gegeben.

Aufgabe der vorliegenden Erfindung ist es deshalb, Additive zur Verfügung zu stellen, deren Flüchtigkeit gering und deren Flammpunkte relativ hoch liegen.

Die erfindungsgemäße Aufgabe wird gelöst durch den Einsatz von organischen Alkalisatzen gemäß Anspruch 1 als Additiv.

Die organischen Alkalisalze sind in Elektrolyten, die üblicherweise in nichtwässrigen sekundären Lithiumbatterien eingesetzt werden, gelöst.

Es wurde gefunden, daß die Additive an der Deckschichtbildung an Anode und Kathode teilnehmen. Die Deckschicht führt zur Passivierung der Elektroden und damit zur Erhöhung der Zyklisierbarkeit der Elektroden. Die Filmbildung auf der Kathode kann zudem der Erhöhung der Sicherheit im Fall der Überladung dienen, da nach Auslösen einer mechanischen Sicherung, z.B. durch einen Diskonektor wie in US 5741606 beschrieben, durch "interne Selbstentladung" die Spannung abgebaut wird.

Die Additive zeichnen sich durch sehr hohe thermische Zersetzungspunkte aus. Ein entscheidender Vorteil gegenüber den bisher verwendeten Additiven ist die Ausbildung einer glasartigen, polymeren Schicht bei der thermischen Zersetzung, die z.B. durch einen Kurzschluß hervorgerufen werden kann.

Gegenstand der Erfindung ist daher ein Elektrolyt für nichtwässrige sekundäre Lithiumbatterien, der durch die Zugabe spezieller Additive die Performance, wie z.B. die Deckschichtbildung, Zyklisierbarkeit, Sicherheit, Leitfähigkeit, Tieftemperaturverhalten, verbessert.

Überraschend wurde gefunden, daß zur Verbesserung der Passivierung der Anode Lithiumsalze geeignet sind, die sich aktiv an dem Aufbau einer passivierenden Deckschicht auf der Graphitelektrode beteiligen. Es wurde gefunden, daß die Qualität der Deckschicht entscheidend verbessert wird. Durch die Reduktion des Additivs erhält man auf der Anode einen Film, der für Lithium-Ionen durchlässig ist. Dieser Film bewirkt bereits ab dem zweiten Zyklus eine verbesserte Zyklisierbarkeit der Anode.

Desweiteren wurde gefunden, daß sich diese Additive bei Potentialen oberhalb des Ladepotentials der gewählten Kathode oxidativ zersetzen und dadurch einen passivierenden Film auf der Kathode aufbauen. Diese Filme sind für Lithiumionen durchlässig, schützen das gewählte Lösungsmittel und Leitsalz vor der oxidativen Zersetzung.

Besonders interessant erscheint der Einsatz in auf LiCoO₂ und LiNiO₂ basierenden Batteriesystemen. Von diesen Elektrodenmaterialien ist bekannt, daß sie im überladenen Zustand instabil sind. Dies kann zu einer heftigen Reaktion mit dem Elektrolyten führen, wodurch entsprechende Sicherheitsrisiken entstehen. Stand der Technik sind interne Sicherungsmechanismen, wie z.B. sogenannte "Diskonektoren". Bei Überladung einer Batterie werden im allgemeinen unter Wärmeentwicklung gasförmige Komponenten frei. Durch den dadurch resultierenden Druckanstieg wird durch den Diskonektor der Kontakt zwischen Elektrode und Stromableiter unterbrochen und somit ein weiteres Überladen der Batterie verhindert. Problematisch ist dabei, daß die Batterie im geladenen, instabilen Zustand verbleibt.

Eine externe Entladung ist, bedingt durch die irreversible Trennung der Kontakte, nicht mehr möglich.

Ziel ist es, durch Zugabe ausgewählter Additive im Fall des Überladens, also bei Potentialen größer der Ladespannung, einen Film auf die Kathode aufzubringen, der nach Ansprechen des Diskonekts kontrolliert mit der Kathode reagiert und somit durch interne Selbstentladung das "Überpotential" abbaut.

Nachfolgend wird ein allgemeines Beispiel der Erfindung näher erläutert.

### a) Verhalten der Additive bei niedrigen Potentialen

In einer Meßzelle mit einer Elektrode aus Lithium-Metall, Kohlenstoffen, Graphit, graphitischen Kohlenstoffen oder andere Lithium-Interkalations und Insertions-Verbindungen oder Legierungsverbindungen, einer Lithiumgegenelektrode und einer Lithiumreferenzelektrode werden jeweils 3-5 Zyklovoltammogramme hintereinander aufgenommen. Ausgehend vom Ruhepotential wird das Potential mit einer Vorschubgeschwindigkeit von 0,01-1 mV/s auf 0 V gegen Li/Li⁺ erniedrigt und im weiteren Verlauf zurück auf das Ruhepotential gefahren.

Die Lade bzw. Entladekapazitäten Q_{L} bzw. Q_{E} ergeben sich durch nummerische Integration der erhaltenen I(t)-Kurven. Die Zyklisierausbeute erhält man aus dem Quotienten Q_{L}/Q_{E}.

Als Elektrolyte können Lösungen von LiPF₆, LiBF₄,, LiClO₄, LiAsF₆, LiCF₃SO₃, LiN(CF₃SO₂)₂ oder LiC(CF₃SO₂)₃ und deren Mischungen in aprotischen Lösungsmitteln wie EC, DMC, PC, DEC, EC, PC, BC, VC, Cyclopentanone, Sulfolane, DMS, 3-Methyl-1,3-oxazolidine-2-on, DMC, DEC, γ-Butyrolacton, EMC, MPC, BMC, EPC, BEC, DPC, 1,2-Diethoxymethan, THF, 2-Methyltetrahydrofuran, 1,3-Dioxolan, Methylacetat, Ethylacetat und deren Mischungen verwendet werden. Die Elektrolyte können auch organische Isocyanate (DE 199 44 603) zur Herabsetzung des Wassergehaltes enthalten. Auch Lithiumkomplexsalze der Formel 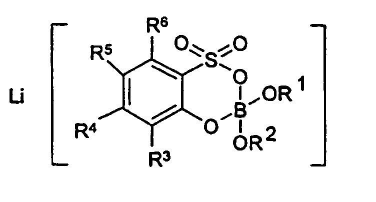 wobei
R¹ und R² gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl (C₁ bis C₆), Alkoxygruppen (C₁ bis C₆) oder Halogen (F, Cl, Br) substituiert sein kann, haben,
oder jeweils einzeln oder gemeinsam die Bedeutung eines aromatischen heterozyklischen Rings aus der Gruppe Pyridyl, Pyrazyl oder Pyrimidyl, der unsubstituiert oder ein- bis vierfach durch Alkyl (C₁ bis C₆), Alkoxygruppen (C₁ bis C₆) oder Halogen (F, Cl, Br) substituiert sein kann, haben,
oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl (C₁ bis C₆), Alkoxygruppen (C₁ bis C₆) oder Halogen (F, Cl, Br) substituiert sein kann, haben,
R³-R⁶ können jeweils einzeln oder paarweise, gegebenenfalls durch eine Einfach oder Doppelbindung direkt miteinander verbunden, folgende Bedeutung haben:
1. Alkyl (C₁ bis C₆),Alkyloxy (C₁ bis C₆) oder Halogen (F, Cl, Br)
2. ein aromatischer Ring aus den Gruppen
Phenyl, Naphthyl, Anthracenyl oder Phenanthrenyl, der unsubstituiert oder ein- bis sechsfach durch Alkyl (C₁ bis C₆), Alkoxygruppen (C₁ bis C₆) oder Halogen (F, Cl, Br) substituiert sein kann,
Pyridyl, Pyrazyl oder Pyrimidyl, der unsubstituiert oder ein- bis vierfach durch Alkyl (C₁ bis C₆), Alkoxygruppen (C₁ bis C₆) oder Halogen (F, Cl, Br) substituiert sein kann,
die über folgendes Verfahren (DE 199 32 317) dargestellt werden
a) 3-, 4-, 5-, 6-substituiertes Phenol (III) in einem geeigneten Lösungsmittel mit Chlorsulfonsäure versetzt wird,
b) das Zwischenprodukt (IV) aus a) mit Chlortrimethylsilan umgesetzt, filtriert und fraktioniert destilliert wird,
c) das Zwischenprodukt (II) aus b) mit Lithiumtetramethanolat borat(1-), in einem geeigneten Lösungsmittel umgesetzt und daraus das Endprodukt (I) isoliert wird, können im Elektrolyten enthalten sein.

Ebenso können die Elektrolyte Verbindungen der folgenden Formel (DE 199 41 566)

[([R¹(CR²R³)ₖ]ₗAₓ)_{y}Kt]^{+ -}N(CF₃)₂

wobei
- Kt=: N, P, As, Sb, S, Se
- A=: N, P, P(O), O, S, S(O), SO₂, As, As(O), Sb, Sb(O)
R¹, R² und R³
gleich oder verschieden
H, Halogen, substituiertes und/oder unsubstituiertes Alkyl CₙH₂ₙ₊₁, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl CₘH₂ₘ₋₁, ein- oder mehrfach substituiertes und/oder unsubstituiertes Phenyl, substituiertes und/oder unsubstituiertes Heteroaryl,
A kann in verschiedenen Stellungen in R¹, R² und/oder R³ eingeschlossen sein,
Kt kann in cyclischen oder heterocyclischen Ring eingeschlossen sein,
die an Kt gebundenen Gruppen können gleich oder verschieden sein mit
- n=: 1-18
- m=: 3-7
- k=: 0, 1-6
- l=: 1 oder 2 im Fall von x=1 und 1 im Fall x=0
- x=: 0,1
- y=: 1-4
bedeuten, enthalten.

Aber auch Elektrolyte enthaltend Verbindungen der allgemeinen Formel (DE 199 53 638)

X-(CYZ)ₘ-SO₂N(CR¹R²R³)₂

mit
- X: H, F, Cl, CₙF₂ₙ₊₁, CₙF₂ₙ₋₁, (SO₂)ₖN(CR¹R²R³)₂
- Y: H, F, Cl
- Z: H, F, Cl
- R¹, R², R³: H und/oder Alkyl, Fluoralkyl, Cycloalkyl
- m: 0-9 und falls X=H, m≠0
- n: 1-9
k 0, falls m=0 und k=1, falls m=1-9,
sowie Komplexsalze der allgemeinen Formel (DE 199 51 804)

M^{x+}[EZ]^{y-}_{x/y}

worin bedeuten:
- x, y: 1, 2, 3, 4, 5, 6
- M^{x+}: ein Metallion
- E: einer Lewis-Säure, ausgewählt aus der Gruppe
BR¹R²R³, AlR¹R²R³, PR¹R²R³R⁴R⁵, AsR¹R²R³R⁴R⁵, VR¹R²R³R⁴R⁵,
R¹ bis R⁵ gleich oder verschieden, gegebenenfalls durch eine Einfach- oder Doppelbildung direkt miteinander verbunden sind, jeweils einzeln oder gemeinsam die Bedeutung
eines Halogens (F, Cl, Br),
eines Alkyl- oder Alkoxyrestes (C₁ bis C₈) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl (C₁ bis C₈) oder F, Cl, Br substituiert sein kann
eines, gegebenenfalls über Sauerstoff gebundenen aromatischen heterozyklischen Rings aus der Gruppe Pyridyl, Pyrazyl oder Pyrimidyl, der unsubstituiert oder ein- bis vierfach durch Alkyl (C₁ bis C₈) oder F, Cl, Br substituiert sein kann, haben können und
- Z: OR⁶, NR⁶R⁷, CR⁶R⁷R⁸, OSO₂R⁶, N(SO₂R⁶)(SO₂R⁷), C(SO₂R⁶)(SO₂R⁷)(SO₂R⁸), OCOR⁶, wobei
R⁶ bis R⁸ gleich oder verschieden sind, gegebenenfalls durch eine Einfach- oder Doppelbindung direkt miteinander verbunden sind, jeweils einzeln oder gemeinsam die Bedeutung
eines Wasserstoffs oder die Bedeutung wie R¹ bis R⁵ haben,können verwendet werden.

Diese Elektrolyte können in elektrochemischen Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) oder Polymeren (DE 199 46 066) beschichtet sind.

Es werden 0% zur Kontrolle und zwischen 0,1 und 10% (bezogen auf die Gesamtmasse Leitsalz) Additive aus der Gruppe der organischen Alkaliborate zugegeben. Vorzugsweise werden zwischen 0,1 und 7 % Additive dem Leitsalz zugegeben.

Bei der Auswertung der Meßkurven wird deutlich, daß sich das Additiv bei Potentialen von ca. 900-1000 mV gegen Li/Li⁺ reduktiv zersetzt.

Durch die Reduktion des Additivs wird im 1. Zyklus mehr Kapazität, im Vergleich zu herkömmlichen Systemen, verbraucht. Spätestens nach dem 3. Zyklus erhält man jedoch signifikant höhere Zyklisierausbeuten als ohne Additiv.

### b) Verhalten der Additive bei hohen Potentialen

In einer Meßzelle mit Edelstahl, Platin- bzw. Goldarbeitselektrode, Lithiumgegenelektrode und Lithiumreferenzelektrode wurden jeweils 3-5 Zyklovoltammogramme hintereinander aufgenommen. Hierzu wurde ausgehend vom Ruhepotential das Potential zuerst mit einer Vorschubgeschwindigkeit von 1 mV/s bis 100 mV/s auf Spannungen größer als das jeweilige Zersetzungspotential des entsprechenden Additivs gegen Li/Li⁺ erhöht und im weiteren Verlauf zurück auf das Ruhepotential gefahren.

Abhängig vom Oxidationspotential werden die Additive im ersten Zyklus bei Potentialen zwischen 3 V und 5 V gegen Li/Li⁺ oxidiert. Diese Oxidation führt jedoch nicht wie bei den herkömmlichen Salzen wie LiPF₆, Li-Imid oder Li-Methanid zu einem andauernden Stromanstieg, sondern nach Durchlaufen eines Maximums mit relativ geringen Strömen zu einem Aufbau einer passivierenden Deckschicht auf der Arbeitselektrode.

Als Elektrolyte können Lösungen von LiPF₆, LiBF₄, , LiClO₄, LiAsF₆, LiCF₃SO₃, LiN(CF₃SO₂)₂ oder LiC(CF₃SO₂)₃ und deren Mischungen in aprotischen Lösungsmitteln wie EC, DMC, PC, DEC, EC, PC, BC, VC, Cyclopentanone, Sulfolane, DMS, 3-Methyl-1,3-oxazolidine-2-on, DMC, DEC, γ-Butyrolacton, EMC, MPC, BMC, EPC, BEC, DPC, 1,2-Diethoxymethan, THF, 2-Methyltetrahydrofuran, 1,3-Dioxolan, Methylacetat, Ethylacetat und deren Mischungen verwendet werden. Es werden 0% zur Kontrolle und zwischen 0,1 und 10% (bezogen auf die Gesamtmasse Leitsalz) Additive aus der Gruppe der organischen Alkaliborate zugegeben. Besonders bevorzugt werden zwischen 0,1 und 7 % Additive dem Leitsalz zugegeben.

### c) Eigenschaften der oxidativ gebildeten Deckschicht

In einer Meßzelle mit Edelstahlarbeitselektrode, Lithiumgegenelektrode und Lithiumreferenzelektrode werden jeweils 3-5 Zyklovoltammogramme hintereinander aufgenommen. Ausgehend vom Ruhepotential wird das Potential zuerst mit einer Vorschubgeschwindigkeit von 10 mV/s-20 mV/s auf Werte größer als das jeweilige Zersetzungspotential der entsprechenden Additive erhöht. Hierbei wird eine Deckschicht auf der Elektrode abgeschieden. Im weiteren Verlauf erniedrigt man das Potential auf Werte kleiner 0V gegen Li/Li⁺ wodurch eine Lithiumabscheidung auf der Edelstahlelektrode initiiert wird. Lithium-Ionen müssen hierzu durch den gebildeten Film wandern. Um auszuschließen, daß sich die Deckschicht bei diesem Vorgehen löst, wurde das Potential erneut auf Werte größer als das jeweilige Zersetzungspotential der angegebenen Salze erhöht. In dem Elektrolyten ist eine Lithiumzyklisierung (erkennbar an den Abscheide- und Auflösepeaks bei niedrigen Potentialen) möglich. Desweiteren wird die Deckschicht durch das gewählte Verfahren nicht aufgelöst, da sonst im zweiten und allen folgenden Zyklen eine Oxidation des verwendeten Salzes bei den oben angegebenen Potentialen detektierbar sein müßte.

### d) Die Aufbringung einer Deckschicht auf bestimmte Kathodenmaterialien

Besonders interessant sind LiMn₂O₄, LiCoO₂, LiNiO₂, LiNiₓCo₁₋ₓO₂-Kathoden. In einer Meßzelle wird eine Arbeitselektrode mit einer der hier angegebenen Zusammensetzung, Lithiumgegenelektrode und Lithiumreferenzelektrode verwendet.

Als Elektrolyte können Lösungen von LiPF₆, LiBF₄, LiClO₄, LiAsF₆, LiCF₃SO₃, LiN(CF₃SO₂)₂ oder LiC(CF₃SO₂)₃ und deren Mischungen in aprotischen Lösungsmitteln wie EC, DMC, PC, DEC, EC, PC, BC, VC, Cyclopentanone, Sulfolane, DMS, 3-Methyl-1,3-oxazolidine-2-on, DMC, DEC, γ-Butyrolacton, EMC, MPC, BMC, EPC, BEC, DPC, 1,2-Diethoxymethan, THF, 2-Methyltetrahydrofuran, 1,3-Dioxolan, Methylacetat, Ethylacetat und deren Mischungen verwendet werden. Es werden 0% zur Kontrolle und zwischen 0,1 und 10% (bezogen auf die Gesamtmasse Leitsalz) Additive aus der Gruppe der organischen Alkaliborate zugegeben. Vorzugsweise werden zwischen 0,1 und 7 % Additive dem Leitsalz zugegeben.

Ausgehend vom Ruhepotential werden die Kathoden zuerst vollständig gegen Li/Li⁺ geladen.

Die Kathode wird anschließend überladen. Hierbei erreicht die Spannung einen durch die Meßanordnung vorgegebenen oberen Wert. Schaltet man nun den Potentiostaten/Galvanostaten ab, fällt das Protential sehr schnell ab.

Im Vergleich zur Referenz erfolgt bei den erfindungsgemäßen Elektrolyten mit Additiven der Potentialanstieg im Bereich 4.3-6 V gegen Li/Li⁺ langsamer. Diese läßt sich durch eine gewünschte Zersetzung des Additivs und dadurch bedingte Deckschichtbildung erklären.

Nach der Abschaltung des Potentiostaten/Galvanostaten (es wird ein Auslösen des Diskonektors simuliert) fällt in beiden Elektrolyten das Potential der Kathode schnell ab.

Im Fall des Elektrolyten ohne Additiv pendelt sich das Potential auf Werte um 4,2-4,3 V gegen Li/Li⁺ ein. Die Kathode verbleibt demnach im geladenen, energiereichen Zustand.

Im Gegensatz dazu bewirkt die Zugabe von Additiven ein Absinken des Potentials. Das Potential entspricht dann dem Ruhepotential einer ungeladenen Elektrode. Dies spricht dafür, daß Additive bzw. der durch die Zersetzung des Additivs gebildete Film in der Lage ist, durch eine interne Selbstentladung das "Überpotential" kontrolliert abzubauen und somit die Batterie nach Auslösen einer Sicherung (z.B. Diskonekt) in einen energiearmen Zustand zu überführen.

Erfindungsgemäß sind als Additive Verbindungen folgender Formel geeignet:

Li⁺ B⁻(OR¹)ₘ(OR²)ₚ (I)

worin,
- m und p: 0, 1, 2, 3 oder 4 mit m+p=4 und
R¹ und R² gleich oder verschieden sind,
gegebenenfalls durch eine Einfach- oder Doppelbindung direkt miteinander verbunden sind,
jeweils einzeln oder gemeinsam die Bedeutung einer aromatischen oder aliphatischen Carbon- oder Sulfonsäure haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder
jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder einbis vierfach durch A oder Hal substituiert sein kann,
haben und
- Hal: F, Cl oder Br
und
- A: Alkyl mit 1 bis 6 C-Atomen, das ein- bis dreifach halogeniert sein kann.

Als besonders bevorzugte Additive sind Lithium-bis[1,2-benzendiolato(2-)O,O']borat(1-), Lithium-bis[3-fluoro-1,2-benzendiolato(2-)O,O']borat(1-), Lithium-bis[2,3-naphthalindiolato(2-)O,O'] borat(1-), Lithium-bis[2,2'-biphenyldiolato(2-)O,O']borat(1-), Lithium-bis[salicylato(2-)O,O']borat(1-), Lithium-bis[2-olato-benzensulfonato (2-)O,O']borat(1-), Lithium-bis[5-fluoro-2-olato-benzensulfonato (2-)O,O']borat zu nennen.

Die nachfolgenden Beispiele sollen die Erfindung näher erläutern, ohne sie jedoch zu beschränken.

### Beispiele

### Beispiel 1

In einer Meßzelle mit Graphitanode (SFG 44 mit PVDF-Binder) Lithiumgegenelektrode und Lithiumreferenzelektrode wurden jeweils 3 Zyklovoltammogramme hintereinander aufgenommen. Hierzu wurde ausgehend vom Ruhepotential das Potential zuerst mit einer Vorschubsgeschwindigkeit von 0,1 mV/s auf O V gegen Li/Li⁺ erniedrigt und im weiteren Verlauf zurück auf das Ruhepotential gefahren.

Als Elektrolyte wurden Lösungen von LiPF₆ in EC/DMC (1:1) verwendet, die 0% (Kontrolle), 1% und 5% (bezogen auf die Masse LiPF₆) Lithium-bis[salicylato(2-)O,O']borat(1-) (kurz: Lithium-Salborat) enthalten.

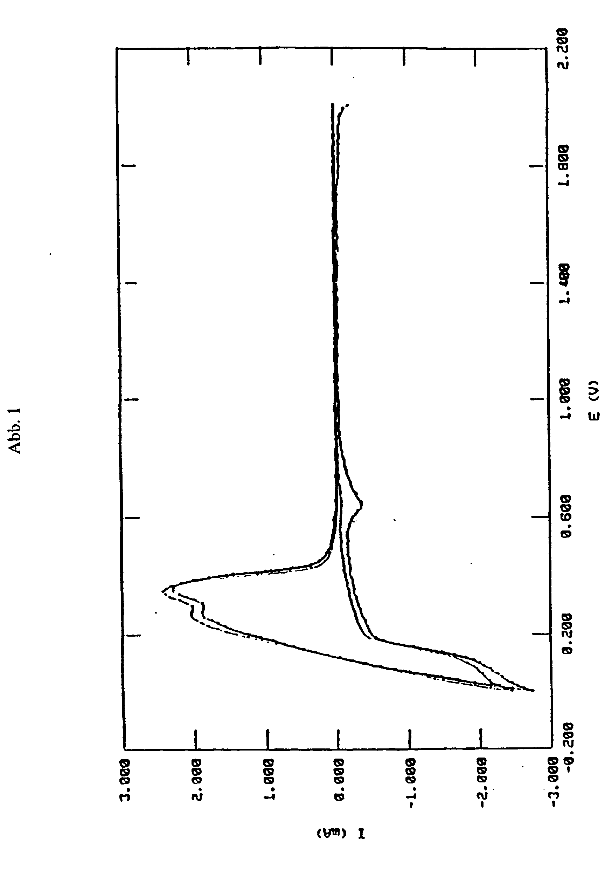

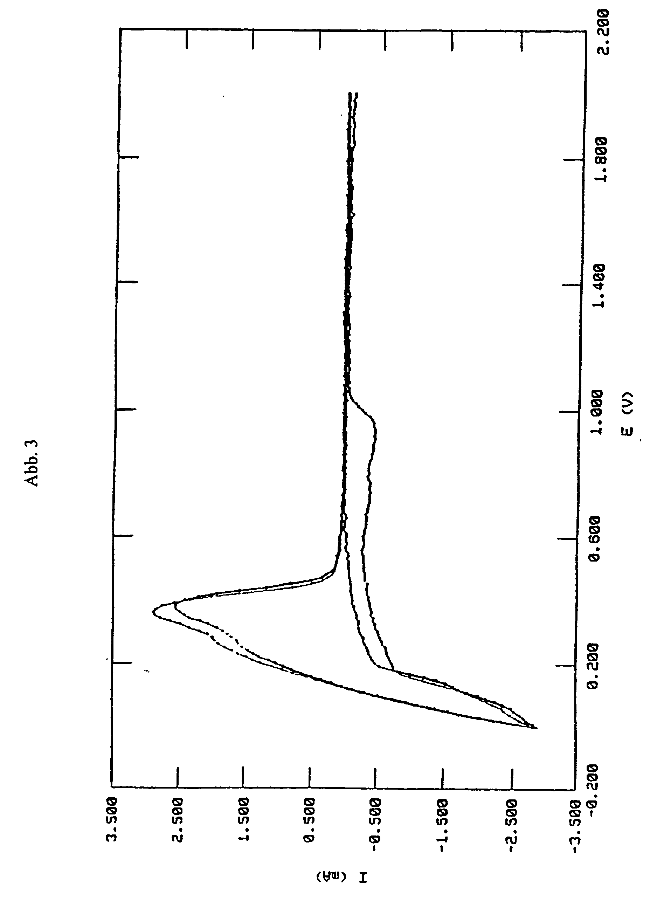

Die Ergebnisse sind in Tabelle 1 sowie in den Abbildungen 1, 2 und 3 zusammengefaßt.

**Tabelle 1:**

| Ausbeuten der Zyklisierung an Graphit | | |
|---|---|---|
| **Elektrolyt** | **Ausbeute 1. Zyklus** | **Ausbeute 3. Zyklus** |
| 1M LiPF₆ in EC/DMC (1:1) | 71,7 % | 90,5 % |
| 1M LiPF₆ in EC/DMC (1:1) + 1% Lithium-bis[salicylato (2-)O,O']borat(1-) | 69,5 % | 95,5 % |
| 1M LiPF₆ in EC/DMC (1:1) + 5% Lithium-bis[salicylato (2-)O,O']borat(1-) | 61,3 % | 95,1 % |

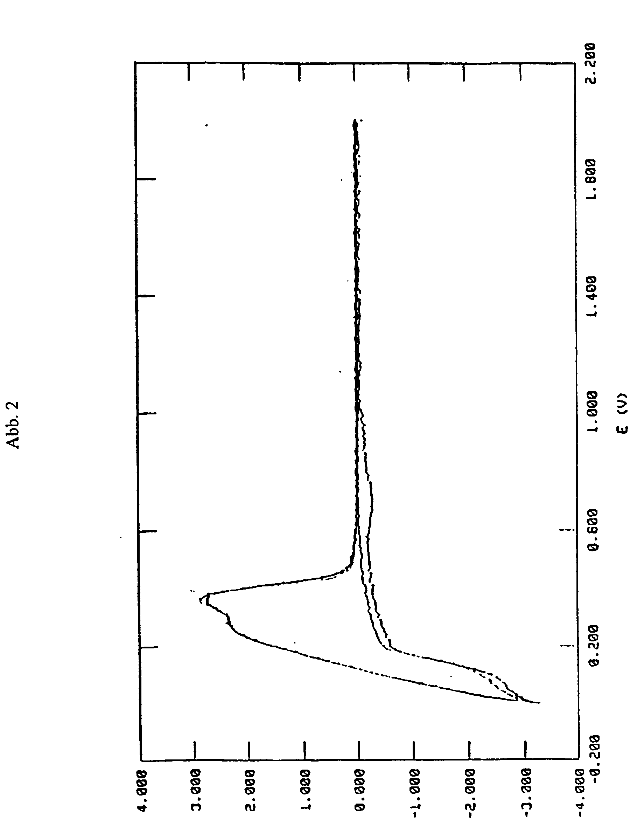

Aus den Abbildungen 1 und 2 ist klar erkennbar, daß sich das Additiv kurz vor der Filmbildung durch Ethylencarbonat zersetzt. Das Reduktionspotential kann zu ca. 900-1000 mV gegen Li/Li⁺ abgegeben werden.

Durch die Reduktion des Additivs wird im ersten Zyklus etwas mehr an Kapazität verbraucht. Dieser Nachteil wird ab dem 3. Zyklus ausgeglichen. Man erhält signifikant höhere Zyklisierausbeuten.

### Beispiel 2

### Passivierung der Kathode

Es wurden Lithiumsalze gefunden, die sich aktiv an dem Aufbau einer passivierenden Deckschicht auf der Kathode beteiligen. Die gebildete Deckschicht ist dabei für Lithium-Ionen durchlässig.

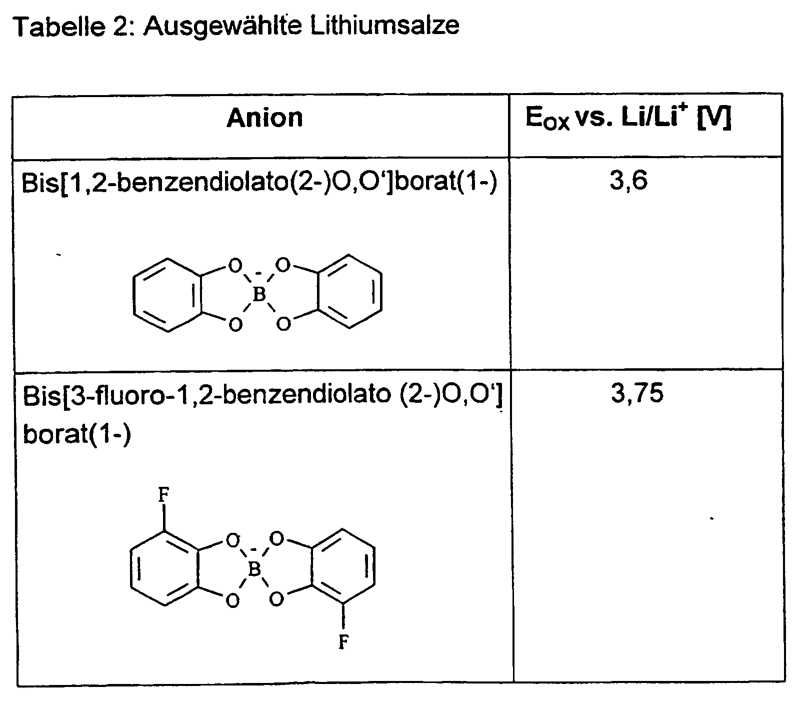

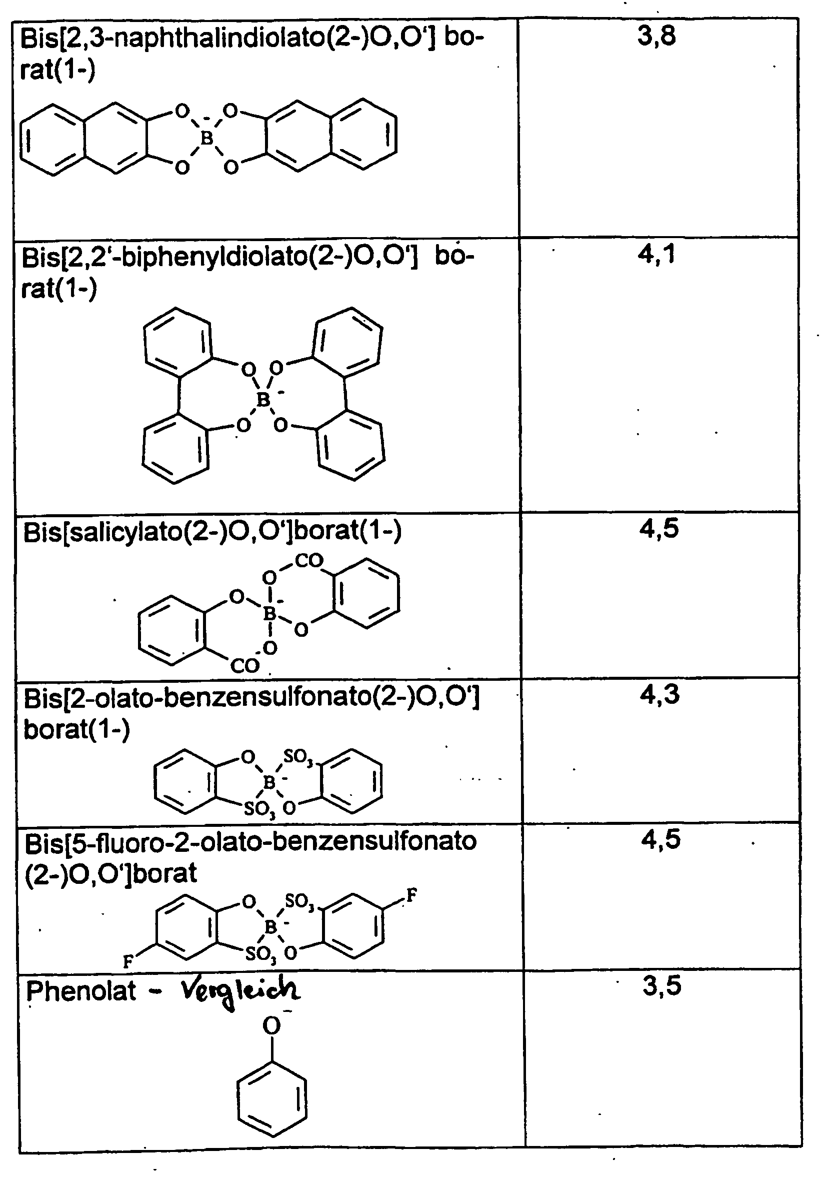

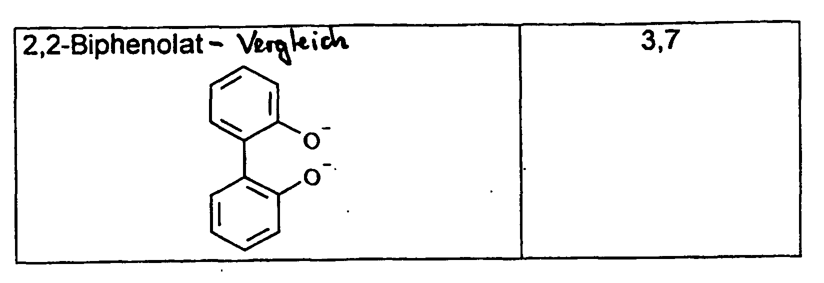

### 2a) Experimente an Platinelektroden

In einer Meßzelle mit Edelstahl, Platin- bzw. Goldarbeitselektrodeelektrode, Lithiumgegenelektrode und Lithiumreferenzelektrode wurden jeweils 5 Zyklovoltammogramme hintereinander aufgenommen. Hierzu wurde ausgehend vom Ruhepotential das Potential zuerst mit einer Vorschubsgeschwindigkeit von 10 mV/s bzw. 20 mV/s auf 5 V gegen Li/Li⁺ erhöht und im weiteren Verlauf zurück auf das Ruhepotential gefahren.

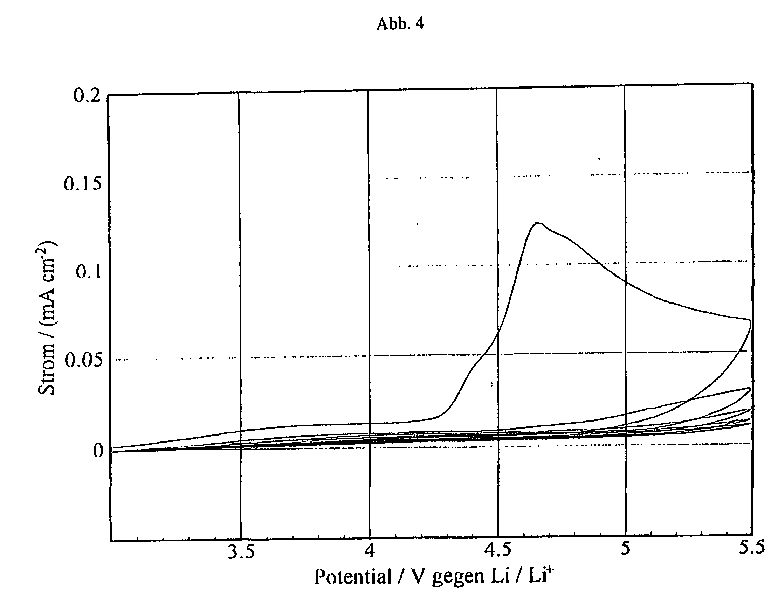

Es zeigt sich für die in Tabelle 2 angegebenen Salze folgender charakteristische Verlauf. Abhängig vom Oxidationspotential werden die angegebenen Salze bei Potentialen zwischen 3.5 und 4,5V gegen Li/Li⁺ oxidiert. Diese Oxidation führt jedoch nicht wie bei anderen Salzen wie LiPF₆, Li-Imid oder Li-Methanid zu einem andauernden Stromanstieg, sondern nach Durchlaufen eines Maximums mit relativ geringen Strömen zu einem Aufbau einer passivierenden Deckschicht auf der Arbeitselektrode. Abbildung 4 zeigt dies am Beispiel des Lithium-bis[2-olato-benzensulfonato(2-)O,O']borat(1-).

### 2b) Eigenschaften der gebildeten Deckschicht

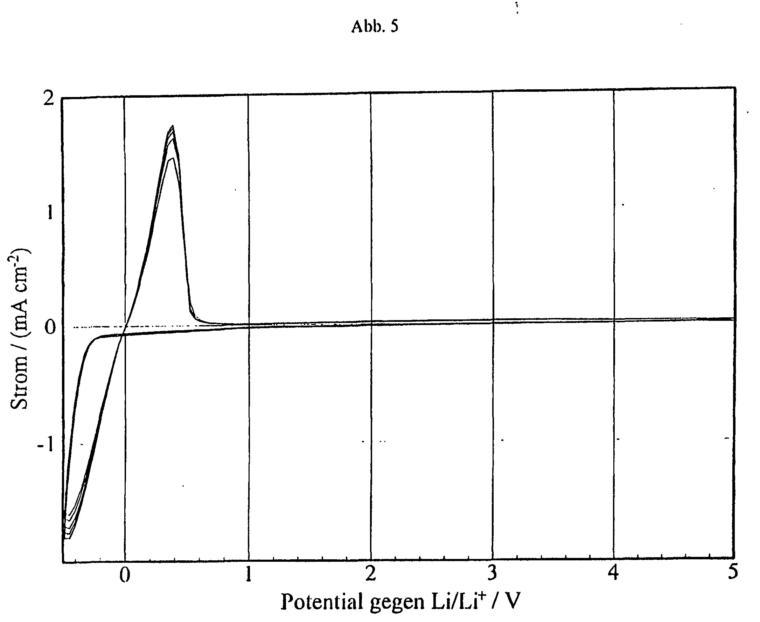

In einer Meßzelle mit Edelstahlarbeitselektrode, Lithiumgegenelektrode und Lithiumreferenzelektrode wurden jeweils 5 Zyklovoltammogramme hintereinander aufgenommen. Hierzu wurde ausgehend vom Ruhepotential das Potential zuerst mit einer Vorschubsgeschwindigkeit von 10 mV/s -20 mV/s auf Werte größer als das jeweilige Zersetzungspotential der angegebenen Salze erhöht. Hierbei wird eine Deckschicht auf der Elektrode abgeschieden. Im weiteren Verlauf erniedrigt man das Potential auf Werte kleiner 0V gegen Li/Li⁺, wodurch eine Lithiumabscheidung auf der Edelstahlelektrode initiiert wird. Lithium-Ionen müssen hierzu durch den gebildeten Film wandern. Um auszuschließen, daß sich die Deckschicht bei diesem Vorgehen löst, wurde das Potential erneut auf Werte größer als das jeweilige Zersetzungspotential der angegebenen Salze erhöht. Abbildung 5 zeigt stellvertretend die erhaltenen Ergebnisse für Lithium-bis[2-olatobenzensulfonato(2-)O,O']borat(1-). In dem Elektrolyten ist eine Lithiumzyklisierung möglich. Dies ist an den Abscheide- und Auflösepeaks bei niedrigen Potentialen erkennbar. Desweiteren wird die Deckschicht durch das gewählte Verfahren nicht aufgelöst, da sonst im zweiten und allen folgenden Zyklen eine Oxidation des verwendeten Salzes bei den oben angegebenen Potentialen detektierbar sein müßte.

### Beispiel 3

In Knopfzellen mit metallischer Lithiumanode und LiCoO₂ werden Zyklisierungsexperimente durchgeführt. Als Elektrolyt wurde Lösungen von LiPF₆ in EC/DMC (1:1) verwendet, die 0% (Kontrolle), 1 % und 5 % (bezogen auf die Masse LiPF₆) Lithium-bis[salicylato(2-)O,O'] borat(1-) enthalten.

Die Ergebnisse sind in den Tabellen 3, 4 und 5 zusammengefaßt.

**Tabelle 3:**

| System 1M LiPF₆ in EC/DMC (1:1) | | |
|---|---|---|
| **Zyklennummer** | **Ladekapazität [mAh/g]** | **Entladekapazität [mAh/g]** |
| 1 | 164,6 | 153,4 |
| 2 | 155,1 | 153,6 |
| 3 | 155,0 | 153,8 |

**Tabelle 4:**

| System 1M LiPF₆ in EC/DMC (1:1) + 1 % Lithium-bis[salicylato(2-)O,O']borat(1-) | | |
|---|---|---|
| **Zyklennummer** | **Ladekapazität [mAh/g]** | **Entladekapazität [mAh/g]** |
| 1 | 164,0 | 153,7 |
| 2 | 155,2 | 153,0 |
| 3 | 154,0 | 152,8 |
| 4 | 153,4 | 152,5 |

**Tabelle 5:**

| System 1M LiPF₆ in EC/DMC (1:1) + 5% Lithium-bis[salicylato(2-)O,O']borat(1-) | | |
|---|---|---|
| **Zyklennummer** | **Ladekapazität [mAh/g]** | **Entladekapazität [mAh/g]** |
| 1 | 163,4 | 149,8 |
| 2 | 151,0 | 148,9 |
| 3 | 149,5 | 148,1 |
| 4 | 148,4 | 147,1 |

Aus den angegebenen Werte ist ersichtlich, daß ein Zusatz von 1 % Borat keinen negativen Einfluß auf die Performance der verwendeten Kathode hat.

### Beispiel 4

### Verhalten des Additivs Lithium-bis[salicylato(2-)O,O'] borat(1-) beim Überladen

In einer Meßzelle mit LiCoO₂-Arbeitselektrode Lithiumgegenelektrode und Lithiumreferenzelektrode wurde folgender Meßzyklus aufgenommen.

Als Elektrolyt wurden Lösungen von LiPF₆ in EC/DMC (1:1) verwendet, die 0 % (Referenz) bzw. 1,5 % Lithium-bis[salicylato (2-)O,O'] borat(1-) enthalten.

Ausgehend vom Ruhepotential wurde die Kathode zuerst mit einer Laderate von C/15 - C/18 bis auf 4,3 V gegen Li/Li⁺ geladen.

Anschließend wurde die Kathode mit einer Laderate von C/5 überladen. Hierbei erreicht die Spannung einen vorgegebenen oberen Wert von 6V gegen Li/Li⁺. Schaltet man nun den Potentiostaten/Galvanostaten ab, fällt das Potential sehr schnell ab.

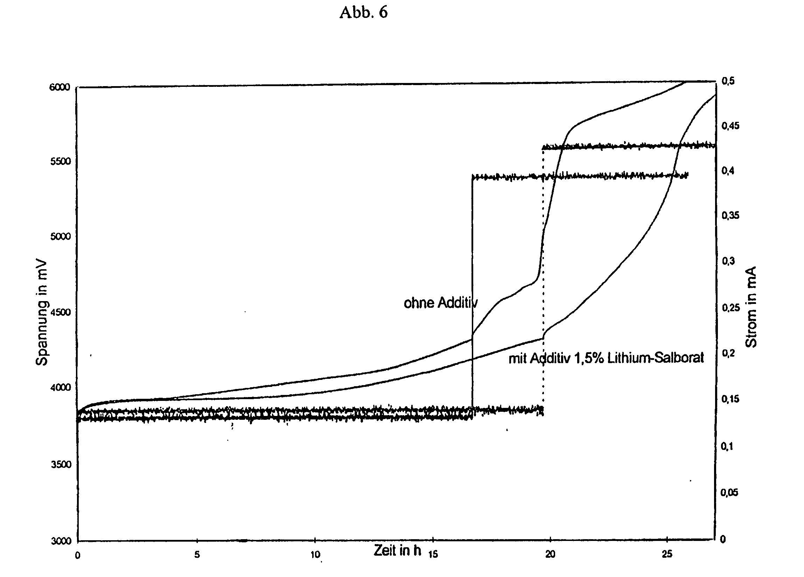

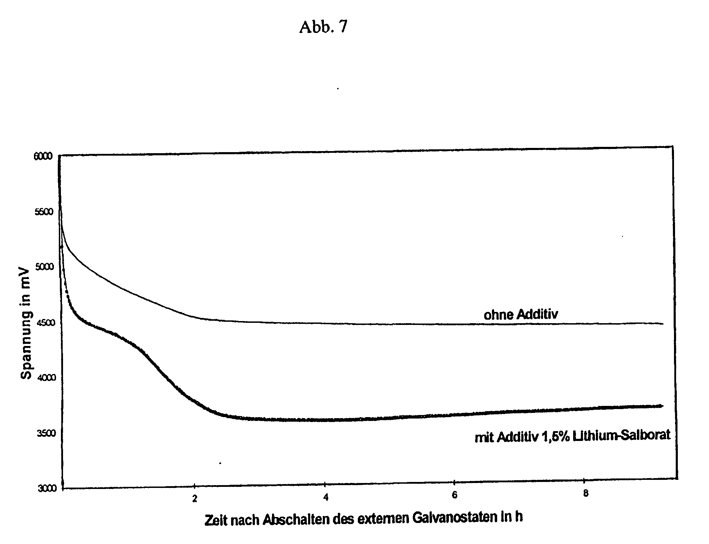

### Vergleich der Kurven (Abbildungen 6 und 7):

Im Vergleich zur Referenz erfolgt der Potentialanstieg in Bereich 4.3-6 V gegen Li/Li⁺ beim Lithium-bis[salicylato(2-)O,O'] borat(1-) enthaltenen Elektrolyten langsamer. Dieses läßt sich durch eine gewünschte Zersetzung des Additivs und die dadurch bedingte Deckschichtbildung erklären.

Nach Abschalten des externen Potentiostaten/Galvanostaten, ein Auslösen des Diskonektors wird damit simuliert, fällt in beiden Elektrolyten das Potential der Kathode schnell ab.

Im Fall des Elektrolyten ohne Additiv pendelt sich das Potential auf Werte um 4,2-4,3 V gegen Li/Li⁺ ein. Die Kathode verbleibt im geladenen, energiereichen Zustand.

Im Gegensatz dazu bewirkt eine Zugabe von Lithium-bis[salicylato (2-)O,O']borat(1-) ein Absinken des Potentials auf Werte um 3,7 V gegen Li/Li⁺. Dies entspricht dem Ruhepotential einer ungeladenen LiCoO₂-Elektrode. Dies spricht dafür, daß Lithium-bis[salicylato (2-)O,O']borat(1-) bzw. der durch die Zersetzung des Additives gebildete Film in der Lage ist, durch eine interne Selbstentladung das "Überpotential" kontrolliert abzubauen und somit die Batterie nach Auslösen einer Sicherung (z.B. Diskonekt) in einen energiearmen Zustand zu überführen.

### Beispiel 5

In Knopfzellen mit metallischer Lithiumanode und LiMn₂O₄ werden Zyklisierungsexperimente durchgeführt. Als Elektrolyt werden Lösungen von LiPF₆ in EC/DMC (1:1) verwendet, die 0% (Kontrolle) und 0,2% (bezogen auf die Masse des Elektrolyten) Lithium-bis[2,2'biphenyldiolato(2-)O,O']borat(1-) enthalten:

**Tabelle 6:**

| System 1M LiPF₆ in EC/DMC (1:1) | | |
|---|---|---|
| Zyklennummer | Ladekapazität [mAh/g] | Entladekapazität [mAh/g] |
| 1 | 119,8 | 112,5 |
| 2 | 111,8 | 111,6 |
| 3 | 111,0 | 110,3 |
| 4 | 109,8 | 110,2 |
| 5 | 111,5 | 110,8 |
| 6 | 109,6 | 109,0 |
| 7 | 108,7 | 108,8 |
| 8 | 108,7 | 108,8 |
| 9 | 109,0 | 108,7 |
| 10 | 108,1 | 107,7 |

**Tabelle 7:**

| System 1M LiPF₆ in EC/DMC (1:1) = 0,2% Lithium-bis[2,2'biphenyldiolato(2-)O,O']borat(1-) | | |
|---|---|---|
| Zyklennummer | Ladekapazität [mAh/g] | Entladekapazität [mAh/g] |
| 1 | 130,5 | 119,8 |
| 2 | 118,4 | 117,0 |
| 3 | 118,6 | 117,4 |
| 4 | 117,7 | 116,5 |
| 5 | 116,5 | 115,5 |
| 6 | 116,9 | 114,8 |
| 7 | 116,4 | 114,4 |
| 8 | 114,5 | 113,4 |
| 9 | 113,8 | 112,8 |
| 10 | 113,9 | 113,6 |

Aus den angegebenen Werten ist ersichtlich, daß ein Zusatz von 0,2% Lithium-bis[2,2'biphenyldiolato(2-)O,O']borat(1-) einen signifikanten, positiven Einfluß auf die Performance der verwendeten Kathode hat.

## Patentansprüche

1. Elektrolyt, bestehend aus
einem in aprotischen Lösungsmitteln gelösten lithiumhaltigen anorganischen Leitsalz oder lithiumhaltigen organischen Leitsalz aus der Gruppe der Methanide, Triflate und Imide und
mindestens einem organischen Salz der Formel (I) als Additiv,
Li⁺ B⁻(OR¹)ₘ(OR²)ₚ (I)
worin,
m und p 0, 1, 2, 3 oder 4 mit m+p=4 und
R¹ und R² gleich oder verschieden sind,
gegebenenfalls durch eine Einfach- oder Doppelbindung direkt miteinander verbunden sind, jeweils einzeln oder gemeinsam die Bedeutung einer aromatischen oder aliphatischen Carbon- oder Sulfonsäure haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy- Sulfonsäuren, der unsubstituiert oder ein- bis vierfach durch A oder Hal substituiert sein kann
haben und
Hal F, Cl oder Br
und
A Alkyl mit 1 bis 6 C-Atomen, das ein- bis dreifach halogeniert sein kann,
wobei die Additive in Konzentrationen zwischen 0,1 und 10% bezogen auf die Gesamtmasse Leitsalz enthalten sind.

2. Elektrolyt nach Anspruch 1,
**dadurch gekennzeichnet, dass** die Additive ausgewählt sind aus der Gruppe:
Lithium-bis[1,2-benzendiolato(2-)O,O']borat(1-),
Lithium-bis[3-fluoro-1,2-benzendiolato(2-)O,O']borat(1-),
Lithium-bis[2,3-naphthalindiolato(2-)O,O']borat(1-),
Lithium-bis[2,2'-biphenyldiolato(2-)O,O']borat(1-),
Lithium-bis[salicylato(2-)O,O']borat(1-),
Lithium-bis[2-olatobenzensulfonato(2-)O,O']borat(1-),
Lithium-bis[5-fluoro-2-olatobenzensulfonato(2-)O,O']borat(1-),
Lithium-bis[oxalato(2-)O,O']borat(1-),
Lithium-bis[malonato(2-)O,O']borat(1-).

3. Elektrolyt nach Anspruch 1 oder 2,
**dadurch gekennzeichnet, dass** das Additiv Lithium-bis[salicylato(2-)O,O']borat(1-) enthalten ist.

4. Elektrochemische Zelle bestehend aus Kathode, Anode, Separator und Elektrolyt, **dadurch gekennzeichnet, dass** sie einen Elektrolyten gemäß Ansprüchen 1, 2 oder 3 enthält.

5. Verwendung von einem organischen Salz der Formel (I) als Additiv in elektrochemischen Zellen, Batterien und sekundären Lithiumbatterien.

6. Verwendung von einem organischen Salz der Formel (I) als Additiv in Kombination mit anderen Lithiumsalzen in sekundären Lithiumbatterien.

## Claims

1. Electrolyte consisting of
a lithium-containing inorganic conductive salt or lithium-containing organic conductive salt, dissolved in aprotic solvents, from the group of the methanides, triflates and imides and
at least one organic salt of the formula (I) as additive
Li⁺ B⁻(OR¹)ₘ(OR²)ₚ (I)
in which
m and p denote 0, 1, 2, 3 or 4, where m+p=4 and
R¹ and R² are identical or different,
are optionally bonded directly to one another by a single or double bond, each, individually or together, have the meaning of an aromatic or aliphatic carboxylic or sulfonic acid, or
each, individually or together, have the meaning of an aromatic ring from the group phenyl, naphthyl, anthra- cenyl or phenanthrenyl, which may be unsubstituted or mono- to tetrasubstituted by A or Hal, or
each, individually or together, have the meaning of a heterocyclic aromatic ring from the group pyridyl, pyrazyl or bipyridyl, which may be unsubstituted or mono- to trisubstituted by A or Hal, or
each, individually or together, have the meaning of an aromatic hydroxy acid from the group of aromatic hydroxycarboxylic acids or aromatic hydroxysulfonic acids, which may be unsubstituted or mono- to tetrasubstituted by A or Hal,
and
Hal denotes F, Cl or Br
and
A denotes alkyl having 1 to 6 C atoms, which may be mono- to trihalogenated,
where the additives are present in concentrations between 0.1 and 10%, based on the total weight of conductive salt.

2. Electrolyte according to Claim 1,
**characterised in that** the additives are selected from the group:
lithium bis[1,2-benzenediolato(2-)O,O']borate(1-),
lithium bis[3-fluoro-1,2-benzenediolato(2-)O,O']borate(1-),
lithium bis[2,3-naphthalenediolato(2-)O,O']borate(1-),
lithium bis[2,2'-biphenyldiolato(2-)O,O']borate(1-),
lithium bis[salicylato(2-)O,O']borate(1-),
lithium bis[2-olatobenzenesulfonato(2-)O,O']borate(1-),
lithium bis[5-fluoro-2-olatobenzenesulfonato(2-)O,O']borate(1-),
lithium bis[oxalato(2-)O,O']borate(1-),
lithium bis[malonato(2-)O,O']borate(1-).

3. Electrolyte according to Claim 1 or 2,
**characterised in that** the additive
lithium bis[salicylato(2-)O,O']borate(1-) is present.

4. Electrochemical cell consisting of cathode, anode, separator and electrolyte, **characterised in that** it contains an electrolyte according to Claims 1, 2 or 3.

5. Use of an organic salt of the formula (I) as additive in electrochemical cells, batteries and secondary lithium batteries.

6. Use of an organic salt of the formula (I) as additive in combination with other lithium salts in secondary lithium batteries.

## Revendications

1. Electrolyte constitué par
un sel conducteur inorganique contenant du lithium ou un sel conducteur organique contenant du lithium, dissous dans des solvants aprotiques, pris parmi le groupe des méthanures, des triflates et des imides et
au moins un sel organique de la formule (I) en tant qu'additif
Li⁺ B⁻(OR¹)ₘ(OR²)ₚ (I)
dans laquelle
m et p représentent 0, 1, 2, 3 ou 4, où m+p=4 et
R¹ et R² sont identiques ou différents,
sont en option liés directement l'un à l'autre par une liai- son simple ou une liaison double, chacun, individuelle- ment ou ensemble, présente la signification d'un acide carboxylique ou sulfonique aromatique ou aliphatique, ou chacun, individuellement ou ensemble, présente la signi- fication d'un anneau aromatique pris parmi le groupe phényle, naphthyle, anthracényle ou phénanthrényle, qui peut être non substitué ou mono- à tétrasubstitué par A ou Hal, ou
chacun, individuellement ou ensemble, présente la signi- fication d'un anneau aromatique hétérocyclique pris parmi le groupe pyridyle, pyrazyle ou bipyridyle, qui peut être non substitué ou mono- à trisubstitué par A ou Hal,
ou
chacun, individuellement ou ensemble, présente la signi- fication d'un acide hydroxy aromatique pris parmi le groupe des acides hydroxycarboxyliques aromatiques ou des acides hydroxysulfoniques aromatiques, qui peut être non substitué ou mono- à tétrasubstitué par A ou
Hal,
et
Hal représente F, Cl ou Br
et
A représente alkyle comportant de 1 à 6 atomes de C, qui peut être mono- à trihalogéné,
où les additifs sont présents selon des concentrations entre 0,1 et 10%, sur la base du poids total de sel conducteur.

2. Electrolyte selon la revendication 1,
**caractérisé en ce que** les additifs sont choisis parmi le groupe:
bis[1,2-benzènediolato(2-)O,O']borate(1-) de lithium,
bis[3-fluoro-1,2-benzènediolato(2-)O,O']borate(1-) de lithium,
bis[2,3-naphthalènediolato(2-)O,O']borate(1-) de lithium,
bis[2,2'-biphényldiolato(2-)O,O']borate(1-) de lithium,
bis[salicylato(2-)O,O']borate(1-) de lithium,
bis[2-olatobenzènesulfonato(2-)O,O']borate(1-) de lithium,
bis[5-fluoro-2-olatobenzènesulfonato(2-)O,O']borate(1-) de lithium,
bis[oxalato(2-)O,O']borate(1-) de lithium,
bis[malonato(2-)O,O']borate(1-) de lithium.

3. Electrolyte selon la revendication 1 ou 2,
**caractérisé en ce que** l'additif
bis[salicylato(2-)O,O']borate(1-) de lithium est présent.

4. Cellule électrochimique constituée par une cathode, une anode, un séparateur et un électrolyte, **caractérisée en ce qu'**elle contient un électrolyte selon les revendications 1, 2 ou 3.

5. Utilisation d'un sel organique de la formule (I) en tant qu'additif dans des cellules électrochimiques, des accumulateurs et des accumulateurs au lithium secondaires.

6. Utilisation d'un sel organique de la formule (I) en tant qu'additif en combinaison avec d'autres sels de lithium dans des accumulateurs au lithium secondaires.
